# EUROPEAN PATENT APPLICATION

(11) **EP 3 498 765 A1**
(43) Date of publication of application: **19.06.2019**
(21) Application number: 18212451.1
(22) Date of filing: 13.12.2018
(51) Int. Cl.: C08J 9/00, C08J 9/18

(54) **CONDUCTIVE FOAM BEAD AND METHOD OF MANUFACTURINGTHE SAME**

(30) Priority: 14.12.2017 KR 20170171979
(71) Applicant: Korea Kumho Petrochemical Co., Ltd., Seoul 04542 (KR)
(72) Inventor: KIM, Ki Hong, 07365 Seoul (KR); KIM, Dong Hwan, 34119 Daejeon (KR)
(74) Representative: Zardi, Marco

(57) **Abstract**

Provided are a conductive foam bead, which includes a resin composition including a polyolefin resin, a carbon nanotube assembly consisting of a plurality of carbon nanoparticles, which have an average outer diameter of 8 to 50 nm and an average inner diameter that is 40% or more of the average outer diameter, and a foaming agent, and a plurality of cells having an average diameter of 10 to 200 µm, and a method of manufacturing the same.

## Description

### CROSS-REFERENCE TO RELATED APPLICATION

This application claims priority to and the benefit of Korean Patent Application No. 10-2017-0171979, filed on DEC 14, 2017, the disclosure of which is incorporated herein by reference in its entirety.

### BACKGROUND

### 1. Field of the Invention

The present invention relates to a conductive foam bead and a method of manufacturing the same.

### 2. Discussion of Related Art

A thermoplastic resin refers to a resin that is softened when heated, thereby exhibiting plasticity, and solidified when cooled. Such thermoplastic resins have excellent processability and excellent plasticity, and thus are widely applied to various household goods, office automation equipment, electrical and electronic products, automobile parts, etc. In addition, depending on the type and characteristics of a product employing such a thermoplastic resin, attempts to use it as a high-value-added material by imparting a specific property have been continuously made.

Particularly, when a thermoplastic resin is applied to a field in which friction occurs between resin products or between a resin and another material, damage and contamination of products may occur due to a charging phenomenon, and thus it is necessary to impart electrical conductivity to the thermoplastic resin.

As described above, conventionally, to impart electrical conductivity to a thermoplastic resin, a conductive filler such as carbon black, graphite, a carbon fiber, metal powder, metal-coated inorganic powder or a metal fiber has been used. However, to obtain meaningful results for impartment of electrical conductivity, a conductive filler should be added at approximately 20 wt% or more with respect to the thermoplastic resin, resulting in degradation in abrasion resistance and mechanical properties of the thermoplastic resin.

To solve this problem, recently, there are various attempts to exhibit both of the mechanical properties and electrical conductivity of a thermoplastic resin using carbon nanotubes as a conductive filler. However, to impart electrical conductivity to a thermoplastic resin, particularly, a polyolefin resin, when carbon nanotubes are added, compared to when other materials are used, sufficient electrical conductivity is not exhibited, and an excessive amount of the carbon nanotubes is required.

Meanwhile, because of unique softness, a polyolefin foam has been widely used as a construction material, an automobile interior material, or other industrial conveying materials. Particularly, a polyolefin foam is widely used as a material of a box for packaging and delivering a glass substrate used to manufacture a display panel, and such a material of a box for packaging and delivering a glass substrate should have an antistatic function or electrical conductivity so as not to be easily charged by friction with a different material or a peripheral electrical force. This is because, when static electricity generated by friction or the like is accumulated for a long time, a foreign material such as dust flows into a product by static electricity, resulting in defects during a process.

Conventionally, to impart the antistatic function to a polyolefin foam, a method of preparing an antistatic composition consisting of a conductive material such as carbon nanotubes and/or a conductive polymer, and coating a polyolefin foam therewith was used. However, in the method of applying an antistatic composition, there is an inconvenience of previously applying an adhesive onto the surface of a polyolefin foam to prevent the conventional material from being peeled off from the polyolefin foam.

Recently, according to the development of a binder material, technology for a one-component antistatic composition that does not need application of a specific adhesive has been reported, but a polyolefin foam manufactured by the antistatic composition-coating method still has a problem in that the antistatic function is inevitably lowered due to the peeling of the conductive material.

To solve the problem resulting from this method, an integrated-type polyolefin foam prepared by directly compounding a conductive material such as carbon nanotubes with a polyolefin resin was developed, but due to low dispersibility of carbon nanotubes in the polyolefin resin, modification of the surface of a carbon nanotube with an oxidizing agent was needed to impart the antistatic function to the integrated-type polyolefin foam. In addition, to compensate the antistatic function of the carbon nanotubes, a carbon compound such as carbon black or a carbon fiber also has to be used, and therefore a solution for this is needed.

### SUMMARY OF THE INVENTION

To solve the above-described problem of the conventional art, the present invention is directed to providing a conductive foam bead with an excellent antistatic property.

The present invention is also directed to providing a method of more simply and economically manufacturing a conductive foam bead compared to a method of coating a polyolefin foam with an antistatic composition.

In one aspect, the present invention provides a conductive foam bead, which includes: a resin composition including a polyolefin resin, a carbon nanotube assembly consisting of a plurality of carbon nanoparticles, which have an average outer diameter of 8 to 50 nm and an average inner diameter that is 40% or more of the average outer diameter, and a foaming agent; and a plurality of cells having an average diameter of 10 to 200 µm.

According to an exemplary embodiment, the polyolefin resin may be one selected from the group consisting of high-density polyethylene, low-density polyethylene, linear low-density polyethylene, a polyethylene copolymer, polypropylene and a mixture of two or more thereof.

According to an exemplary embodiment, the polyethylene copolymer may be one selected from the group consisting of ethylene vinylacetate, ethylene butylacrylate, ethylene ethylacrylate and a mixture of two or more thereof.

According to an exemplary embodiment, the carbon nanotubes may have a Raman intensity ratio (I_{G}/I_{D}) of 1.0 or more.

According to an exemplary embodiment, the carbon nanotubes may have a carbon purity of 95% or more.

According to an exemplary embodiment, the carbon nanotubes may have an apparent density of 0.01 to 0.2 g/ml.

According to an exemplary embodiment, the carbon nanotube assembly may have an average bundle diameter of 1 to 10 µm.

According to an exemplary embodiment, the carbon nanotube assembly may have an average bundle length of 30 to 100 µm.

According to an exemplary embodiment, a content of the carbon nanotubes may be 1 to 10 wt% based on the total weight of the resin composition.

According to an exemplary embodiment, the foaming agent may be one selected from the group consisting of propane, n-butane, i-butane, hexane, pentane, heptane, cyclobutane, cyclohexane, methyl chloride, ethyl chloride, methylene chloride, dimethyl ether, diethyl ether, methyl ethyl ether, nitrogen, carbon dioxide, argon and a mixture of two or more thereof.

In another aspect, the present invention provides a method of manufacturing a conductive foam bead, which includes: (a) preparing a master batch by mixing a carbon nanotube assembly consisting of a plurality of carbon nanotubes, which have an average outer diameter of 8 to 50 nm and an average inner diameter that is 40% or more of the average outer diameter, and a polyolefin resin; (b) preparing a resin composition by mixing the master batch and a polyolefin resin; and (c) manufacturing a bead including a plurality of cells having an average diameter of 10 to 200 µm by foaming the resin composition.

According to an exemplary embodiment, a content of the carbon nanotubes in the master batch may be 5 to 30 wt%.

According to an exemplary embodiment, a content of the carbon nanotubes in the resin composition may be 1 to 10 wt%.

According to an exemplary embodiment, in the step (a), the mixing may be performed at 200 to 250°C.

According to an exemplary embodiment, in the step (b), the mixing may be performed at 180 to 250°C.

According to an exemplary embodiment, in the step (c), the foaming may be performed at a temperature of 130 to 150°C and a pressure of 20 to 40 kgf/cm².

According to an exemplary embodiment, in the step (c), the foaming may be performed in the presence of one dispersing medium selected from the group consisting of water, ethylene glycol, glycerin, methanol, ethanol and a mixture of two or more thereof.

According to an exemplary embodiment, in at least one of the steps (a) to (c), a foaming agent may be further mixed.

### BRIEF DESCRIPTION OF THE DRAWINGS

The above and other objects, features and advantages of the present invention will become more apparent to those of ordinary skill in the art by describing in detail exemplary embodiments thereof with reference to the accompanying drawings, in which:
FIG. 1 is an SEM image of a foam bead according to an example of the present invention;
FIG. 2 is an SEM image of a foam bead according to a comparative example of the present invention; and
FIG. 3 shows the result of measuring surface resistances of boxes for packaging and delivering a glass substrate manufactured from foam beads according to the example and comparative example of the present invention.

### DETAILED DESCRIPTION OF EXEMPLARY EMBODIMENTS

Hereinafter, the present invention will be described with reference to the accompanying drawings. However, the present invention may be implemented in various different forms and therefore is not limited to the exemplary embodiments that will be described below.

Throughout the specification, when one part is "connected" with a different part, they may not only be "directly connected" to each other but also be "indirectly connected" with a third member interposed therebetween. Also, when a part "includes" a certain component, it means that, unless particularly stated otherwise, another component may not be excluded but further included.

### Conductive foam bead

One aspect of the present invention provides a conductive foam bead, which includes: a resin composition including a polyolefin resin, a carbon nanotube assembly consisting of a plurality of carbon nanoparticles, which have an average outer diameter of 8 to 50 nm and an average inner diameter that is 40% or more of the average outer diameter, and a foaming agent; and a plurality of cells having an average diameter of 10 to 200 µm.

The polyolefin resin may be one selected from the group consisting of high-density polyethylene, low-density polyethylene, linear low-density polyethylene, a polyethylene copolymer, polypropylene and a mixture of two or more thereof, and preferably polypropylene, but the present invention is not limited thereto.

The polyethylene copolymer may be one selected from the group consisting of ethylene vinylacetate, ethylene butylacrylate, ethylene ethylacrylate and a mixture of two or more thereof, and preferably, ethylene vinylacetate, but the present invention is not limited thereto.

The carbon nanotubes are a material that imparts electrical conductivity to a non-conductor such as a thermoplastic resin, and particularly, a polyolefin resin, and may considerably reduce surface resistance of a product manufactured by foaming and plasticizing a resin composition kneaded with the carbon nanotubes, thereby enhancing electrical conductivity and an antistatic property.

Methods of synthesizing the carbon nanotubes may include arc-discharge, pyrolysis, laser vaporization, plasma chemical vapor deposition, thermal chemical vapor deposition, etc., but any type of carbon nanotubes manufactured by a synthesis method without limitation may be used.

In addition, the carbon nanotubes may be one selected from the group consisting of single-wall carbon nanotubes, double-wall carbon nanotubes, multi-wall carbon nanotubes, a cup-stacked carbon nanofiber in which a plurality of truncated graphenes are stacked, and a mixture of two or more thereof according to the number of walls, and preferably, multi-wall carbon nanotubes having ease in manufacturing and excellent economic feasibility. However, the present invention is not limited thereto.

The carbon nanotube assembly may be present in a bundle form by agglomerating a plurality of single-stranded carbon nanotubes, which have an average outer diameter of 8 to 50 nm and an average inner diameter that is 40% or more, and preferably, 40 to 90% of the average outer diameter. The outer diameter refers to a diameter of the cross-section of a carbon nanotube including a graphite layer that constitutes the wall thereof, and the inner diameter refers to a diameter of the cross-section of a hollow cavity excluding a graphite layer.

At this time, when the single-stranded carbon nanotubes have an average outer diameter of less than 8 nm or more than 50 nm, an average bundle diameter of a carbon nanotube assembly formed by agglomerating the nanotubes may not be controlled to a range to be described below, and thus, carbon nanotubes having an outer diameter in the above-described range are preferably used. The term "bundle" used herein refers to a state in which a plurality of carbon nanotubes are arranged in parallel or mutually entangled in a bundle or rope form. On the other hand, when a plurality of carbon nanotubes are present without a specific form, it is also called "non-bundle-type."

The bundle-type carbon nanotube assembly may be present basically in the state in which a plurality of carbon nanotubes, and preferably, a plurality of multi-wall carbon nanotubes are agglomerated. Each carbon nanotube and an assembly thereof may be formed in a linear shape, a curved shape, or a combination thereof.

In addition, when the average inner diameter of the single-stranded carbon nanotube, that is, a multi-wall carbon nanotube is less than 40% of the average outer diameter, the inner capacity of the carbon nanotube is reduced, thereby degrading electrical conductivity, and therefore the average inner diameter of the carbon nanotube may be 40% or more of the average outer diameter.

Meanwhile, among the methods of analyzing a structure of the carbon nanotube, Raman spectroscopy for analyzing a surface state of the carbon nanotube may be usefully used. The term "Raman spectroscopy" used herein refers to a spectroscopy for obtaining the vibrational frequency of a molecule in the Raman effect, which is a phenomenon in which scattered light having a difference in vibrational frequency as much as that of a molecule is generated when a monochromatic excitation light such as a laser beam is irradiated, and according to the Raman spectroscopy, the crystallinity of carbon nanotubes is quantified.

A peak present in the range of a wave number of 1580±50 cm⁻¹ in the Raman spectrum for the carbon nanotubes is called a G band, which is a peak representing an sp² bond of the carbon nanotubes, indicating a carbon crystal without a structural defect. In addition, a peak present in the range of a wave number of 1360±50 cm⁻¹ is called a D band, which is a peak representing an sp³ bond of the carbon nanotubes, indicating a carbon with a structural defect.

Further, the peak values of the G band and the D band are referred to as I_{G} and I_{D}, respectively, and the crystallinity of the carbon nanotubes can be quantified through a Raman intensity ratio (I_{G}/I_{D}). That is, it means that the higher the Raman intensity ratio, the less structural defects in the carbon nanotubes, and when carbon nanotubes exhibiting a high Raman intensity ratio are used, higher electrical conductivity may be exhibited.

Specifically, the Raman intensity ratio (I_{G}/I_{D}) of the carbon nanotubes may be 1.0 or more. When the I_{G}/I_{D} value of the carbon nanotubes is less than 1.0, due to a large content of amorphous carbon, the crystallinity of the carbon nanotubes may be poor, accordingly, enhancement in electrical conductivity during kneading with the thermoplastic resin composition may be insignificant.

In addition, since the carbon nanotubes may exhibit high electrical conductivity because as carbon content is higher, the amount of an impurity such as a catalyst is less, a carbon purity of the carbon nanotubes may be 95% or more, preferably 95 to 98%, and more preferably 96.5 to 97.5%.

When the carbon purity of the carbon nanotubes is less than 95%, the structural defect of carbon nanotubes is caused, thereby reducing crystallinity, and therefore, the carbon nanotubes may be easily broken and destroyed by an external stimulus.

A carbon nanotube assembly formed by agglomerating the above-described single-stranded carbon nanotubes in a bundle type may have an average bundle diameter of 1 to 10 µm, preferably 3 to 5 µm, and more preferably 3.5 to 4.5 µm, and an average bundle length of 30 to 100 µm, preferably 40 to 60 µm, and more preferably 45 to 55 µm.

The carbon nanotube assembly may be dispersed in a polyolefin resin and may be in contact and connected with each other, thereby forming a three-dimensional network structure, and as such a rigid network structure is formed, electrical conductivity may be enhanced. Particularly, as the average bundle diameter and average bundle length of the carbon nanotube assembly are controlled in certain ranges, a rigid network structure may be formed.

Here, when the carbon nanotube assembly has an average bundle diameter of less than 1 µm or an average bundle length of more than 100 µm, dispersibility may be lowered, resulting in non-uniformity in electrical conductivity per region of the resin composition. When the carbon nanotube assembly has an average bundle diameter of more than 10 µm or an average bundle length of less than 30 µm, due to an instable network structure, electrical conductivity may be lowered.

In addition, since electrical conductivity is lower as oxygen content in the carbon nanotube assembly is higher, carbon nanotubes having a low oxygen content may be used. Specifically, the oxygen content of the carbon nanotube assembly may be 0.5 wt% or less, and preferably 0.1 to 0.5 wt% based on the total weight of the carbon nanotube assembly.

A content of the carbon nanotubes may be 1 to 10 wt% based on the total weight of the resin composition. When the content of the carbon nanotubes is less than 1 wt%, an effect of imparting electrical conductivity to the polyolefin resin may be insignificant, and when the content of the carbon nanotubes is more than 10 wt%, the processability, moldability and mechanical properties of the resin composition may be degraded.

In addition, the carbon nanotubes are processed into a pellet by mechanically and physically pressing the powder-type resin composition, and after processing, the carbon nanotubes may have an apparent density of 0.01 to 0.2 g/ml, and preferably 0.05 to 0.2 g/ml.

When the apparent density of the carbon nanotubes is outside the above-mentioned range, it is difficult to prepare a high concentration master batch including 5 wt% or more of carbon nanotubes. In addition, the carbon nanotubes processed into a pellet prevents the powder from being scattered during operations, thereby improving a work environment.

The foaming agent may be one selected from the group consisting of propane, n-butane, i-butane, hexane, pentane, heptane, cyclobutane, cyclohexane, methyl chloride, ethyl chloride, methylene chloride, dimethyl ether, diethyl ether, methyl ethyl ether, nitrogen, carbon dioxide, argon and a mixture of two or more thereof, and preferably carbon dioxide, but the present invention is not limited thereto.

The conductive foam bead may include a plurality of cells having an average diameter of 10 to 200 µm. The term "cell" used herein refers to an empty space, that is, a void, other than a structure formed of a resin, which is observed in a conventional foam, and can be understood as a concept including a closed cell and an open cell. When the average diameter of the cell is less than 10 µm, the softness of the foam bead and a product manufactured therefrom may be lowered, and when the average diameter of the cell is more than 200 µm, electrical conductivity and the antistatic property may be lowered.

### Method of manufacturing conductive foam bead

Another aspect of the present invention provides a method of manufacturing a conductive foam bead, which includes: (a) preparing a master batch by mixing a carbon nanotube assembly consisting of a plurality of carbon nanotubes, which have an average outer diameter of 8 to 50 nm and an average inner diameter that is 40% or more of the average outer diameter, and a polyolefin resin; (b) preparing a resin composition by mixing the master batch and a polyolefin resin; and (c) manufacturing a bead including a plurality of cells having an average diameter of 10 to 200 µm by foaming the resin composition.

Generally, to impart electrical conductivity to the resin composition, a process of mixing a resin having certain levels of mechanical properties and moldability with a conductive material capable of imparting conductivity, for example, a metal or a different inorganic material, may be performed.

Previously, to improve the electrical conductivity of a resin composition, technology of increasing a content of the conductive material was suggested. However, when a content of a homologous conductive material, particularly, carbon nanotubes was increased to a certain level or more, there was a problem of decreasing processability and workability as well as the mechanical properties of the resin itself. To resolve this problem, there was an attempt to increase the total content of a conductive material in the resin composition in combination with carbon black which has a weak electrical conductivity-imparting effect but has excellent processability and workability, compared to carbon nanotubes.

However, this method is merely for differently adjusting the type and content of a conductive material, and it is common that the mixing of the resin and the conductive material is performed by a single process.

Accordingly, in the step (a), a master batch having a high concentration of carbon nanotubes can be prepared by mixing and extruding carbon nanotubes (or a carbon nanotube assembly) as a conductive filler and a polyolefin resin. The term "master batch" used herein refers to a mixture prepared by previously mixing and dispersing high-concentration additives when a resin composition is prepared, and therefore the preparation of the master batch may enhance the dispersibility of carbon nanotubes in a polyolefin resin, and thereby impart uniform electrical conductivity and the antistatic property to the entire region of the resin composition.

The master batch may be prepared in a sphere or pellet form, but its shape is not limited as long as the master batch is blended with a polyolefin resin in a subsequent step so as to enhance the dispersibility of the carbon nanotubes.

Among thermoplastic resins, the polyolefin resin, which is the base material for the master batch has less changes in physical properties, excellent moldability and excellent chemical resistance within a relatively wide temperature range.

The polyolefin resin may be a homopolymer prepared by polymerization of a single type of monomer, a copolymer prepared by polymerization of more than one type of monomer, or a mixture thereof. The copolymer may be an alternating copolymer, a random copolymer, a block copolymer, or a graft copolymer without limitation of the polymerization type.

In the step (a), the mixing may be performed at 200 to 250°C, preferably 220 to 240°C, and more preferably 230°C. When the temperature is less than 200°C, the polyolefin resin is partially melted, thereby reducing extrusion moldability and the dispersibility of the carbon nanotubes, and when the temperature is more than 250°C, thermal degradation or modification of the polyolefin resin may occur.

In the step (a), the polyolefin resin may be fed and extruded at 10 to 500 kg/hr, and preferably 10 to 30 kg/hr. When the extrusion rate is less than 10 kg/hr, productivity may be reduced, and when the extrusion rate is more than 500 kg/hr, the mixing uniformity between the carbon nanotubes and the polyolefin resin may be reduced.

The master batch, which is the product of the step (a), may include a high content of carbon nanotubes. For example, the content of the carbon nanotubes included in the master batch may be 5 to 30 wt%.

When the content of the carbon nanotubes included in the master batch is less than 5 wt%, an insignificant amount of carbon nanotubes is concentrated in the master batch, and when the content of the carbon nanotubes included in the master batch is more than 30 wt%, the composition of the master batch may be non-uniform, and thereby processability may be degraded.

The carbon nanotubes used in the preparation of the master batch are in a powder form, and processed into a pellet by mechanically and physically pressing. After processing, the apparent density of the carbon nanotubes may be 0.01 to 0.2 g/ml, and preferably 0.05 to 0.2 g/ml.

When the apparent density of the carbon nanotubes is outside the above-mentioned range, it is difficult to prepare a high-concentration master batch containing 5 wt% or more of carbon nanotubes. In addition, the carbon nanotubes processed into a pellet form prevent powder from being scattered during operations, thereby improving a work environment.

An extruder used in the mixing of the step (a) may be a single screw extruder including one screw, or a multi screw extruder including a plurality of screws, and preferably, a biaxial extruder (twin-screw extruder) including two screws for uniform mixing between components and extrusion, but the present invention is not limited thereto. At this time, in the kneading process using the extruder, to inhibit the damage to carbon nanotubes, a mixing and kneading method including feeding the polyolefin resin, preferably using a biaxial extruder, from a main hopper thereof, and providing carbon nanotubes using a side feeder may be used.

In the step (b), the high content of carbon nanotubes included in the master batch is mixed with a polyolefin resin, resulting in let-down. An amount of the polyolefin resin input in the step (b) may be sufficient to dilute the content of the carbon nanotubes in the resin composition, which is the product, to 1 to 10 wt%.

In addition, the polyolefin resin used in the step (b) may be the same as that used in the step (a), and if needed, may be a different type. However, even when the polyolefin resins used in the steps (a) and (b) are different types, in consideration of compatibility between them, one or more monomers included in each polyolefin resin may be the same, or one or more resins included in each polyolefin resin may be the same.

The resin composition prepared by the steps (a) and (b) may use a polyolefin resin with high viscosity as a base material, and may be enhanced in electrical conductivity, compared to a resin composition prepared without using a master batch by a conventional method, and may maintain mechanical properties, resulting in uniform realization of both properties.

Specifically, the master batch may be mixed with the polyolefin resin such that a content of the carbon nanotubes in the resin composition is diluted to become 1 to 10 wt%. When the content of the carbon nanotubes included in the resin composition is less than 1 wt%, electrical conductivity may be degraded, and when the content of the carbon nanotubes included in the resin composition is more than 10 wt%, mechanical properties may be considerably degraded.

In the step (b), the mixing of the master batch and the polyolefin resin may be performed by melt compounding, in-situ polymerization, or solution mixing, and preferably, by melt compounding using an extruder, which can uniformly disperse carbon nanotubes in the resin under a high temperature and a high shearing force and thus obtain a large capacity of products and reduce production costs. The type and characteristics, and the selection criteria of the extruder are the same as described above.

In the step (b), the mixing may be performed at 180 to 250°C, preferably 180 to 240°C, and more preferably, 200°C. When the temperature is less than 180°C, the polyolefin resin may be partially melted, thereby degrading extrusion moldability and the dispersibility of the carbon nanotubes, and when the temperature is more than 250°C, the thermal degradation or modification of the polyolefin resin may occur.

Meanwhile, in at least one of the steps (a) to (c), a foaming agent may be further mixed., and according to the purpose of use of the resin composition, one or more additives selected from the group consisting of a flame retardant, an impact modifier, a flame retardant auxiliary agent, a lubricant, a plasticizer, a thermal stabilizer, an anti-drip agent, an antioxidant, a compatibilizer, a light stabilizer, a pigment, a dye, and an inorganic additive may be further mixed.

A content of the additive may be 0.1 to 10 wt% based on the total weight of the resin composition. When the content of the additive is less than 0.1 wt%, a suitable effect for the purpose of its use may not be achieved, and when the content of the additive is more than 10 wt%, inherent physical properties of the polyolefin resin may be degraded.

In the step (c), a bead including a plurality of cells having an average diameter of 10 to 200 µm may be manufactured by foaming the resin composition.

The foaming is performed by a conventional method at a temperature of 130 to 150°C and a pressure of 20 to 40 kgf/cm². When the temperature and pressure during foaming are outside the above-mentioned ranges, the average diameter of the cell included in the foam bead may not be controlled to 10 to 200 µm, and therefore softness, electrical conductivity and an antistatic property of the foam bead and a product manufactured therefrom may be not achieved in a balanced manner.

The foaming may be performed in the presence of one dispersion medium selected from the group consisting of water, ethylene glycol, glycerin, methanol, ethanol and a mixture of two or more thereof, and preferably water, but the present invention is not limited thereto.

A surface resistance of the foam bead and a product manufactured therefrom may be controlled within a range of 10² to 10¹⁰ Ω/sq, and particularly, in a product requiring an antistatic property or excellent electrical conductivity, the surface resistance may be controlled within a range of 10² to 10⁸ Ω/sq, and preferably 10² to 10⁷ Ω/sq.

The types, contents, functions and action effects of components used in the steps (a) to (c), other than those described above, are as described above.

Hereinafter, the present invention will be described in detail with reference to examples of the present invention.

### Example 1

A master batch was prepared by feeding 10 parts by weight of a carbon nanotube assembly consisting of a bundle of a plurality of multi-wall carbon nanotubes (MWCNTs), which have an average outer diameter of 25.8 nm, an average inner diameter of 13.6 nm, a Raman intensity ratio of 1.25 and a carbon purity of 96.5%, into a side feeder of a twin-screw extruder, feeding 90 parts by weight of a polypropylene resin into a main hopper at 15 kg/hr, and performing melting and kneading at a kneading rate of 300 rpm and a processing temperature of 230°C.

A resin composition containing 3 wt% of carbon nanotubes was prepared by feeding the master batch and a polypropylene resin into a twin-screw extruder at 15 kg/hr, and performing melting and kneading at a kneading rate of 300 rpm and a processing temperature of 200°C.

A spherical foam bead which was approximately 15-fold expanded was manufactured by feeding the resin composition and carbon dioxide into a water-filled reactor, heating the resulting mixture to a temperature of 140°C under a pressure of 30 kgf/cm², and then exposing it to air.

A box for packaging and delivering a glass substrate was manufactured by molding the foam bead according to a conventional method.

### Example 2

A resin composition, a foam bead and a box for packaging and delivering a glass substrate were manufactured by the same method as described in Example 1, except that a content of carbon nanotubes included in a resin composition was adjusted to 4 wt%.

### Example 3

A resin composition, a foam bead and a box for packaging and delivering a glass substrate were manufactured by the same method as described in Example 1, except that a content of carbon nanotubes included in a resin composition was adjusted to 5 wt%.

### Comparative Example 1

A resin composition was prepared by feeding 3 parts by weight of a carbon nanotube assembly consisting of a bundle of a plurality of MWCNTs, which have an average outer diameter of 25.8 nm, an average inner diameter of 13.6 nm, a Raman intensity ratio of 1.25 and a carbon purity of 96.5%, into a side feeder of a twin-screw extruder, feeding 97 parts by weight of a polypropylene resin into a main hopper at 15 kg/hr, and performing melting and kneading at a kneading rate of 300 rpm and a processing temperature of 230°C. The Raman intensity ratio of the multiwall carbon nanotubes was measured at a laser wavelength of 532 nm using a DXR Raman Microscope (Thermo Electron Scientific Instruments LLC).

The resin composition and carbon dioxide were fed into a reactor filled with water, heated to a temperature of 140°C under a pressure of 30 kgf/cm², and exposed to air, thereby manufacturing a spherical foam bead which is expanded approximately 15-fold.

The foam bead was molded by a conventional method, thereby manufacturing a box for packaging and delivering a glass substrate.

### Comparative Example 2

A resin composition, a foam bead and a box for packaging and delivering a glass substrate were manufactured by the same method as described in Comparative Example 1, except that a resin composition was prepared by melting and kneading twice using a twin-screw extruder.

### Comparative Example 3

A master batch was prepared by feeding 10 parts by weight of a carbon nanotube assembly consisting of a bundle of a plurality of MWCNTs, which had an average outer diameter of 15 nm, an average inner diameter of 4.7 nm, a Raman intensity ratio of 0.80 and a carbon purity of 94.3%, into a side feeder of a twin-screw extruder, feeding 90 parts by weight of a polypropylene resin into a main hopper at 15 kg/hr, and performing melting and kneading at a kneading rate of 300 rpm and a processing temperature of 230°C. The Raman intensity ratio of the multiwall carbon nanotubes was measured at a laser wavelength of 532 nm using a DXR Raman Microscope (Thermo Electron Scientific Instruments LLC).

A resin composition containing 3 wt% of carbon nanotubes was prepared by feeding the master batch and a polypropylene resin into a twin-screw extruder at 15 kg/hr, and performing melting and kneading at a kneading rate of 300 rpm and a processing temperature of 200°C.

A spherical foam bead which was approximately 15-fold expanded was manufactured by feeding the resin composition and carbon dioxide into a water-filled reactor, heating the resulting mixture to a temperature of 140°C under a pressure of 30 kgf/cm², and then exposing it to air.

A box for packaging and delivering a glass substrate was manufactured by molding the foam bead by a conventional method.

### Comparative Example 4

A resin composition, a foam bead and a box for packaging and delivering a glass substrate were manufactured by the same method as described in Example 1, except that a content of carbon nanotubes included in a resin composition was adjusted to 4 wt%.

### Comparative Example 5

A resin composition, a foam bead and a box for packaging and delivering a glass substrate were manufactured by the same method as described in Comparative Example 1, except that a content of carbon nanotubes included in a resin composition was adjusted to 5 wt%.

### Comparative Example 6

A spherical foam bead which was approximately 15-fold expanded was manufactured by feeding a polypropylene resin into main hopper of a twin-screw extruder at 15 kg/hr, performing melting and kneading at a kneading rate of 300 rpm and a processing temperature of 230°C, feeding the resultant and carbon dioxide into a reactor filled with water, and heating them to a temperature of 140°C under a pressure of 30 kgf/cm², and then exposing them to air.

### Experimental Example 1

A surface resistance (10^Ω/sq.) of each of the boxes for packaging and delivering a glass substrate, which were manufactured by Example 1 and Comparative Examples 1 and 2, was measured using a surface resistance meter (SIMCO, ST-4), and the result is shown in Table 1 below.

**[Table 1]**

| Classification | Surface resistance (logΩ/sq.) |
|---|---|
| Example 1 | 5.5 |
| Comparative Example 1 | 13.5 |
| Comparative Example 2 | 7.7 |

Referring to Table 1, the box for packaging and delivering a glass substrate (Example 1) which was manufactured by foaming and molding the resin composition prepared by diluting the master batch including high-concentration carbon nanotubes exhibited a considerably lower surface resistance than that prepared without the preparation of a master batch and dilution (Comparative Example 1).

In addition, in the case of the box for packaging and delivering a glass substrate (Comparative Example 2) which was manufactured by foaming and molding the resin composition after melting and kneading were performed twice with the same concentration of the resin composition without the preparation of a master batch and dilution, it can be seen that, due to a higher surface resistance than that in Example 1, the box manufactured through the steps of preparation of a master batch and dilution exhibited relatively excellent electrical conductivity and excellent antistatic property.

### Experimental Example 2

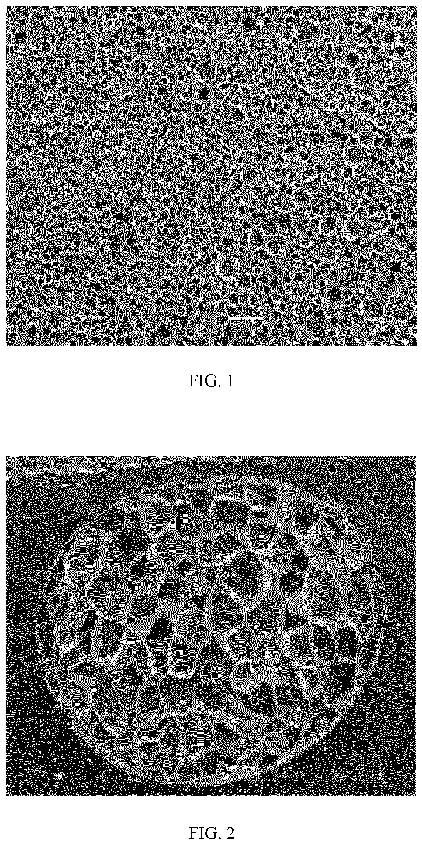

A cell structure of each of the foam beads manufactured by Example 2 and Comparative Example 6 was analyzed by a scanning electron microscope (FE-SEM), and the result is shown in FIGS. 1 and 2.

Referring to FIGS. 1 and 2, the foam bead (Example 2) including a certain amount of carbon nanotubes having predetermined specifications includes a plurality of small cells (diameter: 10 to 200 µm), compared to that without carbon nanotubes (Comparative Example 6).

As shown in Example 2, when the cell size is small and the cell number per unit volume is high, an advantageous structure for forming an electrically conductive network in the foam bead by the carbon nanotubes can be provided.

### Experimental Example 3

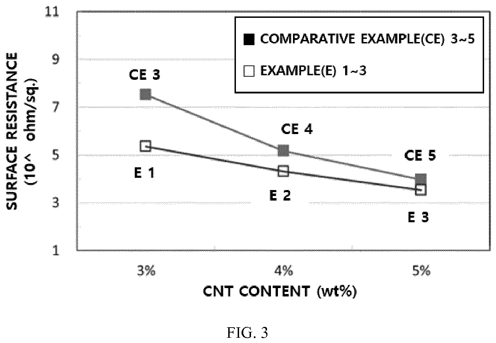

A surface resistance (10^Ω/sq.) of each of the boxes for packaging and delivering a glass substrate, which were manufactured by Examples 1 to 3 and Comparative Examples 3 to 5, was measured using a surface resistance meter (SIMCO, ST-4), and the result is shown in FIG. 3.

Referring to FIG. 3, compared to the boxes manufactured using multi-wall carbon nanotubes having the average inner diameter that is less than 40% of the average outer diameter (Comparative Examples 3 to 5), the boxes manufactured using carbon nanotubes having the average inner diameter that is more than 40% of the average outer diameter (Examples 1 to 3) were considerably decreased in surface resistance, thereby exhibiting relatively excellent electrical conductivity and relatively excellent antistatic property.

A conductive foam bead according to an aspect of the present invention includes carbon nanotubes whose diameter, length, crystallinity and purity are controlled to certain ranges in a polyolefin resin, and thus a cell size of a foam bead manufactured from the polyolefin resin can be controlled to a certain range. Therefore, enhanced electrical conductivity and an enhanced antistatic property can be imparted to the foam bead.

In addition, a method of manufacturing a conductive foam bead according to another aspect of the present invention includes preparing a master batch including a high content of carbon nanotubes by mixing carbon nanotubes and a polyolefin resin, and foaming a mixture of the master batch with a polyolefin resin of the same type or a different type with the polyolefin resin, thereby controlling a cell size of a foam bead manufactured from the polyolefin resin to a certain range. Therefore, enhanced electrical conductivity and an enhanced antistatic property can be imparted to the foam bead.

It should be understood that the effects of the present invention are not limited to the above-described effects, and includes all effects that can be deduced from the configuration of the present invention described in the detailed description or claims of the present invention.

It should be understood by those of ordinary skill in the art that the above descriptions of the present invention are exemplary, and the example embodiments disclosed herein can be easily modified into other specific forms without changing the technical spirit or essential features of the present invention. Therefore, it should be interpreted that the example embodiments described above are exemplary in all aspects, and are not limitative. For example, each component described as a single unit may be distributed and implemented, and components described as being distributed may also be implemented in combined form.

The scope of the present invention is defined by the appended claims and encompasses all modifications and alterations derived from meanings, the scope and equivalents of the appended claims.

## Claims

1. A conductive foam bead, comprising:
a resin composition comprising a polyolefin resin, a carbon nanotube assembly consisting of a plurality of carbon nanoparticles, which have an average outer diameter of 8 to 50 nm and an average inner diameter that is 40% or more of the average outer diameter, and a foaming agent; and
a plurality of cells having an average diameter of 10 to 200 µm.

2. The foam bead according to claim 1, wherein the polyolefin resin is one selected from the group consisting of high-density polyethylene, low-density polyethylene, linear low-density polyethylene, a polyethylene copolymer, polypropylene and a mixture of two or more thereof.

3. The foam bead according to claim 2, wherein the polyethylene copolymer is one selected from the group consisting of ethylene vinylacetate, ethylene butylacrylate, ethylene ethylacrylate and a mixture of two or more thereof.

4. The foam bead according to claim 1, wherein the carbon nanotubes have a Raman intensity ratio (I_{G}/I_{D}) of 1.0 or more.

5. The foam bead according to claim 1, wherein the carbon nanotubes have a carbon purity of 95% or more.

6. The foam bead according to claim 1, wherein the carbon nanotubes have an apparent density of 0.01 to 0.2 g/ml.

7. The foam bead according to claim 1, wherein the carbon nanotube assembly has an average bundle diameter of 1 to 10 µm.

8. The foam bead according to claim 7, wherein the carbon nanotube assembly has an average bundle length of 30 to 100 µm.

9. The foam bead according to claim 1, wherein a content of the carbon nanotubes is 1 to 10 wt% based on the total weight of the resin composition.

10. The foam bead according to claim 1, wherein the foaming agent is one selected from the group consisting of propane, n-butane, i-butane, hexane, pentane, heptane, cyclobutane, cyclohexane, methyl chloride, ethyl chloride, methylene chloride, dimethyl ether, diethyl ether, methyl ethyl ether, nitrogen, carbon dioxide, argon and a mixture of two or more thereof.

11. A method of manufacturing a conductive foam bead, comprising:
(a) preparing a master batch by mixing a carbon nanotube assembly consisting of a plurality of carbon nanotubes, which have an average outer diameter of 8 to 50 nm and an average inner diameter that is 40% or more of the average outer diameter, and a polyolefin resin;
(b) preparing a resin composition by mixing the master batch and a polyolefin resin; and
(c) manufacturing a bead including a plurality of cells having an average diameter of 10 to 200 µm by foaming the resin composition.

12. The method according to claim 11, wherein a content of the carbon nanotubes in the master batch is 5 to 30 wt%.

13. The method according to claim 11, wherein a content of the carbon nanotubes in the resin composition is 1 to 10 wt%.

14. The method according to claim 11, wherein, in the step (a), the mixing is performed at 200 to 250°C.

15. The method according to claim 11, wherein, in the step (b), the mixing is performed at 180 to 250°C.

16. The method according to claim 11, wherein, in the step (c), the foaming is performed at a temperature of 130 to 150°C and a pressure of 20 to 40 kgf/cm².

17. The method according to claim 16, wherein, in the step (c), the foaming is performed in the presence of one dispersion medium selected from the group consisting of water, ethylene glycol, glycerin, methanol, ethanol and a mixture of two or more thereof.

18. The method according to claim 11, wherein a foaming agent is further mixed in at least one of the steps (a) to (c).
